Europäisches Patentamt

European Patent Office

Office européen des brevets

(11) Publication number: **0 575 738 A2**

# EUROPEAN PATENT APPLICATION

(21) Application number: **93107661.6**

(22) Date of filing: **11.05.93**

(51) Int. Cl.⁵: **G11B 11/10**

(30) Priority: **26.05.92 US 888524**

(43) Date of publication of application:
**29.12.93 Bulletin 93/52**

(84) Designated Contracting States:
**DE FR GB NL**

(71) Applicant: **MINNESOTA MINING AND MANUFACTURING COMPANY**
**3M Center,**
**P.O. Box 33427**
**St. Paul, Minnesota 55133-3427(US)**

(72) Inventor: **Hintz, Michael B., c/o Minnesota Mining and**
**Manufact. Co.,**
**2501 Hudson Road,**
**P.O. Box 33427**
**St. Paul, Minnesota 55133-3427(US)**

(74) Representative: **VOSSIUS & PARTNER**
**Postfach 86 07 67**
**D-81634 München (DE)**

(54) **System and method for improving long term stability of exchange-coupled optical media.**

(57) A device and method for selectively destroying horizontal domain walls between a memory layer and a bias layer within exchange-coupled magneto-optical media by reducing and reversing the magnetic field applied to the media prior to shutdown of a drive utilizing the media or prior to removal of the media from a drive.

Fig. 3

The present invention relates to recording methods, apparatus, and media wherein the media comprise two or more magnetic sub-layers which are coupled to one another via the exchange interaction. More particularly, the present invention relates to magneto-optical recording methods, apparatus, and media wherein the media comprises two or more exchange coupled sub-layers and, under certain operating conditions, a magnetic field is utilized to reverse all or part of one or more sub-layers without reversing contiguous portions of the remaining sub-layers.

In recent years, considerable effort has been devoted to the development of optical recording/reproducing methods and associated apparatus and media which satisfy requirements for data storage applications. Optical recording/reproducing methods together with the associated apparatus and media will be interchangeably referred to herein as optical recording systems. Various types of optical recording systems having been proposed, developed and commercialized.

A distinguishing feature of most optical recording systems is that a beam of light, typically from a laser, is employed to reproduce previously recorded information; however, a number of differences also exist among the various optical recording systems. All information is pre-recorded upon the media during manufacture in some optical recording systems known as "read only" systems. The end user of such "read only" systems can reproduce the pre-recorded information but cannot record new information on the media. Examples of read only optical recording systems include the compact disk for music reproduction and the compact disk ROM for digital data storage.

Other optical recording systems allow the end user to record information on the disk as well as reproduce recorded information; the system is "user-recordable" or "user writable". One class of user=recordable optical recording systems enables information recording by the user, but the recorded information cannot be erased and rewritten, although it may be reproduced many times. Such systems are typically referred to as "write once" or "write once read many" (WORM) optical recording systems.

Another class of user-recordable optical recording systems provides the capability for erasure and rewriting of previously recorded information. Such "rewritable" optical recording systems are considered to have the greatest overall promise for computer data storage, as it is often desirable to erase and rewrite computer data. Of the various rewritable optical recording systems, magneto-optical recording systems appear among the most promising. This is due to several advantages which magneto-optical media offers over more conventional magnetic hard disk technology. These advantages include high storage density, removability, and non-contact operation. In comparison with current generation magneto-optical media, however, conventional hard disks enjoy a performance advantage in terms of access time and data transfer rate. The performance disadvantage of present generation magento-optical recording systems may limit their ultimate marketplace acceptance unless considerable effort is focused on improving system performance.

A major contributor to the lower average data rates characteristic of present magneto-optical systems is the fact that a recorded track must first be erased before new data can be overwritten; consequently, at least two spindle revolutions are required for overwrite while conventional magnetic systems overwrite old data in a single pass. A number of schemes have been proposed to allow direct overwrite in magneto-optical recording. Of these schemes, substantial attention has been given to direct overwrite systems employing media with two or more perpendicularly-magnetized, exchange-coupled magnetic sub-layers. Various exchange-coupled direct-overwrite (ECDO) methods exist, however, all methods generally share common features. A first common feature is that all have at least one sub-layer in which the data is stored and from which the data is read, i.e. a memory sub-layer. A second common feature is that all have at least one sub-layer which, over some temperature range, can be switched independently of the memory sub-layer to form a horizontal, i.e. parallel to the film plane, magnetic domain wall between the sub-layers. The horizontal wall stores energy for subsequent use in the writing process. The energy stored in the horizontal wall is used in combination with an applied write or bias field during writing to produce bit cells with either up or down magnetization by modulating the laser power to either high or low write power levels.

The energy required to form the horizontal domain wall and prepare the media for overwriting is supplied by some form of magnet, commonly referred to in the ECDO are as a reset magnet. Most ECDO schemes employ an external reset magnet which is positioned some distance away from the optical head/write magnet assembly but is arranged such that any region addressed by the optical head will subsequently pass through the reset field before again being exposed to the optical assembly. While ECDO techniques are an elegant method for improving magneto-optical media performance, there are several drawbacks to their production and use in recording systems which are overcome by the teachings of this invention.

A device is provided for improving the stability of exchange-coupled magneto-optical media which comprises magnetization means and magnetic field adjustment means. The magnetization means is located proximate the exchange-coupled magneto-optical media for applying magnetic energy to the media prior to writing or reading. The magnetic field adjustment means is provided for selectively destroying the horizontal domain wall between magnetic sub-layers in the media by reducing and reversing the field applied to the media prior to drive shutdown or removal of the media.

Figure 1 is a schematic section view of a media region showing an arbitrary initial magnetization state.

Figure 2 is a schematic section view of a media region showing a magnetization state after a field is induced thereon.

Figure 3 is a schematic section view of a media region showing magnetization state of a sub-region after a field is induced thereon simultaneous with a heat source.

Figure 4 is a media magnetic layer section view showing layer magnetization state immediately after writing for the case of a layer comprising two sub-layers.

Figure 5 is a media magnetic layer section view showing layer magnetization state after reset for the case of a layer comprising two sub-layers.

Figure 6 is a schematic view thereof showing magnetic sub-layer hysteresis loop offset resulting from domain wall formation and destruction upon switching.

Figure 7 is a section view showing a magnet in an operating position.

Figure 8 is a section view showing a magnet rotated to reverse and reduce the field applied to the media.

Figure 9 is a perspective view showing a magnet positioned along a media radius.

Figure 10 is a schematic view of magnetic flux lines as applied by a magnet to a media, corresponding generally to the configuration of magnet and media in Figure 7.

Figure 11 is a schematic view of magnetic flux lines as applied in a reduced and reversed fashion by a magnet to a media, corresponding generally to the configuration of magnet and media in Figure 8.

Figure 12 is a section view showing a plurality of moveable magnets with a down bias and magnetic center up comprising magnetic field adjustment means.

Figure 13 is a section view showing a plurality of movable magnets with a down bias and magnetic center down comprising magnetic field adjustment means.

Figure 14 is a perspective view showing data storage media positioned proximate magnetization means comprising compositionally offset magnetic field adjustment means in the shape of a plurality of disk sections with different magnetic fields.

Figure 15 is a section view showing magnetic field adjustment means comprising power means.

Figure 16a is a section view showing magnetic field adjustment means in an operating position.

Figure 16b is a section view showing magnetic field adjustment means in a reduced and reversed configuration.

Figure 17 is a section view showing magnetic field adjustment means in an operating position.

Figure 18a is a section view showing magnetic field adjustment means in a reduced and reversed configuration.

Figure 18b is a section view showing magnetic field adjustment means in a configuration proximate the media in an operating position.

Figure 19a is a section view showing magnetic field adjustment means in an operating position.

Figure 19b is a section view showing magnetic field adjustment means in a reduced and reversed configuration.

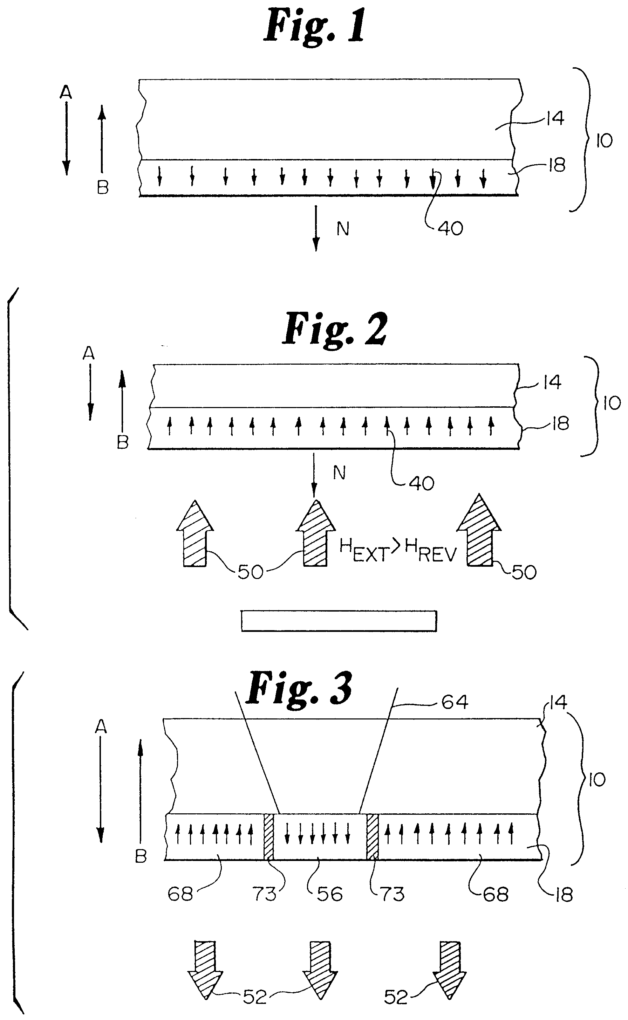

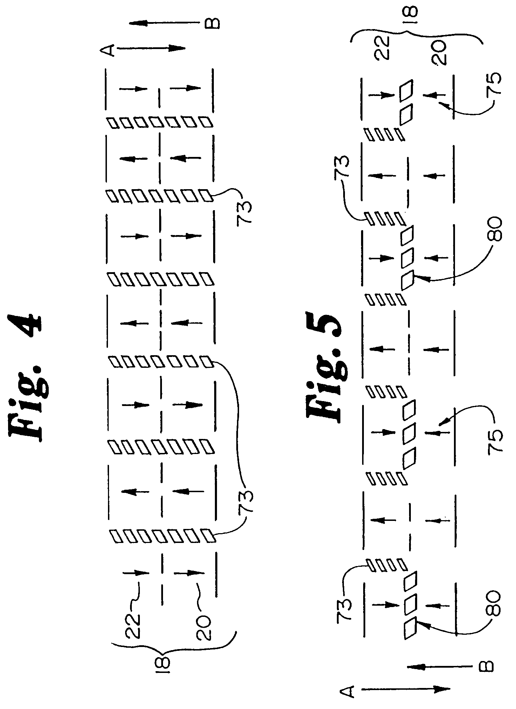

Recording media 10 used in magneto-optical recording systems comprises a substrate 14 and one or more thin magnetic layers 18 exhibiting perpendicular magnetic anisotropy, as shown in Figures 1 and 2. A magnetic layer with perpendicular anisotropy has a direction or axis of magnetization which is substantially perpendicular to the plane of the layers; thus, in the absence of an external field, the magnetic layer or sub-regions thereof may have a direction of magnetization either in the A direction or the B direction, i.e. either substantially parallel or antiparallel to the media surface normal, N.

In general, the magnetization direction, shown by arrows 40 in Figure 1, of a magnetic material may be reversed by the application of a sufficiently large external field. For a layer with perpendicular anisotropy, reversal would be typically accomplished by applying an external field antiparallel to the existing magnetization direction. For example, with reference to Figures 1 and 2, application of a sufficiently large external magnetic field, represented by arrows 50, in the B direction will cause magnetization initially in the A direction to reverse and assume the B direction. In Figures 1 and 2, the field required to reverse magnetization of the magnetic layer is denoted as $H_{rev}$. A common characteristic of magnetic layers used for magneto-optical recording is that the magnitude of $H_{rev}$ changes rapidly with temperature and is much larger at room temperature than at some elevated temperature.

Magnetic materials which can exhibit perpendicular anisotropy and may therefore by suitable for magneto-optical recording magnetic layers include ferromagnetic materials such as PtCo, MnBi and NdCo as well as ferromagnetic materials such as GdFeCo, TbFe, TbFeCo and the like.

Magnetic layers used for magneto-optical recording typically have thickness dimensions ranging from 10 to 300 nm. A magnetic layer may comprise more than one sub-layer, which may be distinguished by changes in structure, composition, or some other physical characteristics along the thickness dimension of the magnetic layer. The definition of the thickness of a magnetic layer, as used herein, is the distance over which contiguous sub-layers interact with one another via the exchange interaction. According to the above definition, the PtCo and PdCo structures described in European patent publication 804,873 comprise a single magnetic layer which in turn comprises many thin Co and Pt or Pd sub-layers. Another example of single-magnetic layer magneto-optical media which comprises more than one sub-layer is described in European patent publication 225,141. In this example, the two ferromagnetic sub-layers are used to enable writing and erasing at reduced external magnetic field. In contrast, the magneto-optical media described in U.S. Patent 5,014,252, comprises layers of magnetic material separated by a layer of dielectric material such that the layers interact via external magnetic fields rather than the exchange interaction. According to the above definition, the magneto-optical media of that U.S. patent comprises two magnetic layers.

Magneto-optical media substrates are typically transparent and have a pattern of concentric or spiral grooves which define the recording track position and facilitate the use of an optical track-following servo system by the recording/reproducing apparatus. Magneto-optical media typically also have additional non-magnetic layers laminated together with the magnetic layer(s). The additional layers provide for optical property optimization, corrosion protection, thermal conductivity adjustment, abrasion resistance, etc., as is well known to those skilled in the art. While it is recognized that additional non-magnetic layers are essential for a practical media construction, they are not germane to the present invention and will not be discussed further herein.

As is commonly known in the computer storage art, patterns of alternating magnetization can be used to represent binary data. Thus, methods and apparatus for forming patterns of alternating magnetization can be utilized to record information. One method for forming patterns of alternating magnetization in magneto-optical media is described in the following example in which is assumed a magneto-optical media that is initially uniformly magnetized in the B direction. As illustrated schematically in Figure 3, writing (i.e. recording information) is accomplished by the interaction of a magnetic field and localized heat source with the media. A magnetic field 52 ($H_{rec}$), is imposed on media 10 in the A direction. The magnitude of $H_{rec}$ is well below the ambient temperature magnetization reversal field,

$$H_{rev}^{amb}.$$

Typical values for $H_{rec}$ range from 100 to 500 Oersteds, while

$$H_{rev}^{amb}$$

typically ranges from 3000 to 15000 Oersteds. Concurrent with the application of $H_{rec}$, a localized heat source is used to raise the media temperature in a small sub-region. The localized heat source is commonly a beam of laser light 64 focused to a circular spot with a diameter of the order of the laser wavelength. Laser power and exposure time are chosen to cause sufficient heating such that $H_{rev}$ decreases and becomes smaller than $H_{rec}$ in some sub-region of the heated magnetic layer. Thus, at some time during magnetic layer heating and cooling, a sub-region of the laser irradiated area reverses and assumes A direction magnetization, as depicted by region 56 in Figure 3. The concurrent action of a magnetic field and localized heat source to effect local magnetization reversal is commonly known in the art as thermomagnetic writing or thermomagnetic recording.

Note in the preceding example that the reversed sub-region with A direction magnetization is surrounded by material 68 with B direction magnetization. Regions within a (ferro or ferri) magnetic material possessing different magnetization directions are known as magnetic domains. As illustrated schematically in Figures 3 and 4, a small boundary volume 73 exists between regions of opposite magnetization in which the local magnetization vector rotates about some axis from the A direction to the B direction; such boundary volumes are known in the art as domain walls or domain boundaries. For the case of domain walls formed within a magnetic layer or sub-layers having perpendicular anisotropy, the normal to the domain wall at any given location will lie substantially parallel to the plane of the film; domain walls characterized by a normal which is substantially parallel to the film plane will be referred to herein as vertical domain walls.

In general, thermomagnetically written sub-regions assume magnetization directions which are parallel to $H_{rec}$ at magnetization reversal temperature. Therefore, in order to write an arbitrary magnetization pattern it is necessary to either reverse $H_{rec}$ at the recording frequency or to start from a uniformly magnetized state with magnetization directed opposite $H_{rec}$ at the reversal temperature. Reversing $H_{rec}$ at the recording frequency is not practical in many magneto-optical recording systems due to considerations of substrate thickness, cost, complexity, and other constraints. Magneto-optical recording systems which do not reverse $H_{rec}$ at the recording frequency typically employ a separate thermomagnetic writing step to erase old data and establish a state of uniform magnetization directed opposite $H_{rec}$ prior to rewriting new data.

Principle of Reading

Reproduction of the data stored on magneto-optical media is based upon the magneto-optical Kerr and/or Faraday effect. Interaction of polarized light with a material exhibiting Kerr or Faraday magneto-optical activity can alter the polarization state of reflected or transmitted radiation such that it differs from the incident radiation polarization state. Furthermore, the polarization state changes depend upon the magnetization direction or state of the material. Magneto-optical media are typically designed such that, when illuminated with plane polarized light, regions of A directed magnetization rotate the polarization plane of the reflected radiation in one direction, while regions of B directed magnetization cause the reflected radiation polarization plane to rotate in the opposite direction. The changes in polarization state of the reflected light can be detected by a suitable arrangement of optical components and photodetectors, as is well known in the magneto-optical recording art. Reproduction of recorded information on magneto-optical media is thus typically accomplished by scanning the recorded region with a focused laser beam and detecting changes in polarization state of the reflected radiation. Readback resolution is typically limited by diffraction to sub-regions similar in dimension to the incident radiation wavelength. The first commercially available magneto-optical systems and media have readback resolution nominally limited to the laser radiation wavelength and require two separate exposures to laser irradiation for erasure and rewriting; these will be referred to herein as first-generation magneto-optical systems and media.

Utility of magnetic layers comprising two or more exchange coupled sub-layers

Magneto-optical media magnetic layers must simultaneously possess a number of characteristics to achieve acceptable overall media performance. Minimum requirements are that the layers must exhibit perpendicular magnetic anisotropy, produce sufficient magneto-optical signal at the reproduction wavelength, exhibit low noise, and possess magnetic reversal properties consistent with the recording system magnetic field and laser power characteristics. Similar to the trends in other types of data storage devices, (e.g. magnetic recording, solid state memory) there is considerable demand to increase magneto-optical recording system performance (e.g. storage density, access time, and data transfer rate). However, the demand for increased performance places more severe requirements on magnetic layer properties. One promising method for improving magnetic layer performance is to employ magnetic layers comprising two or more compositionally differing sub-layers which are coupled amond themselves by the exchange interaction. The sub-layers can to some extent be individually optimized for specific properties, which often yields improvements in overall performance. Magnetic layers comprising two or more sub-layers will be referred to herein as exchange coupled magnetic layers or exchange coupled magnetic films.

A variety of exchange coupled magnetic films has been described in magneto-optical recording methods, apparatus and media literature. For some exchange coupled magnetic films, application of an appropriate external magnetic field within specific temperature range can cause the reversal of one or more magnetic sub-layers without reversing the remaining sub-layers. Analogous to the case for magnetic reversal of a sub-region within a given sub-layer, reversal of a sub-layer can result in formation of a magnetic domain wall between the reversed sub-layer and adjacent sub-layer(s). The normal to domain walls between magnetic sub-layers will be substantially perpendicular to the plane of the layer. Such domain walls will be referred to herein as horizontal domain walls, as schematically depicted by the areas 80 in Figure 5. In general, exchange coupled films may contain both vertical and horizontal domain walls, as is also shown in Figure 5.

Magneto-optical media comprising exchange coupled magnetic films can be classified into two general categories based upon the stability of magnetization states which result in the presence of horizontal domain walls. Herein a magnetic layer magnetization state is defined as a unique set of sub-layer magnetization directions. The basic criteria for magnetization state stability in exchange coupled magnetic films have been described by Kobayashi et al (Jap. J. Appl. Phys., 20, pp. 2089-2095 (1981)) for exchange coupled films with two sub-layers. Although the reasoning employed by Kobayashi et al can be extended to an arbitrary number of sub-layers, the discussion herein is limited, for ease of discussion, to two sub-layers. The Kobayashi et al, description does not describe all situations in exchange coupled films, but is generally referenced in the exchange coupled layer art. According to Kobayashi et al, the external field required to reverse the magnetization of sub-layer i which is exchange coupled to sub-layer j,

$$H^i_{rev},$$

is given by:

$$H^i_{rev} = H^i_c \pm \frac{\sigma ij}{2M^i t^i} \qquad (1)$$

where $M^i$ is the magnetization, $H^i_c$ the coercive field, which is considered positive, and $t^i$ the thickness of sub-layer i. $\sigma^{ij}$ is the energy per unit area of the horizontal domain wall between sub-layers i and j. If the reversal of sub-layer i results in the formation of a horizontal domain wall between sub-layers i and j, the sign of the last term in (1) is positive; and the energy required to form the domain wall inhibits the reversal of layer i, thereby increasing the magnitude of the required external field. For the case in which the reversal of sub-layer i destroys an existing horizontal domain wall between sub-layers i and j, the sign of the last term in (1) is negative; and the energy stored in the domain wall assists the external field in the magnetization reversal process.

In the absence of any external field, magnetization state stability for a magnetic layer comprising sub-layers i and j and a horizontal domain wall can be determined by comparing the magnitude of $2M^iH^i_c$ ti and $2M^jH^j_c$ tj with $\sigma^{ij}$ For cases in which both

$$2M^iH^i_c > \sigma^{ij} \qquad (2)$$

$$\text{and} \qquad 2M^jH^j_c tj > \sigma^{ij} \qquad (3)$$

are satisfied, magnetization states containing a horizontal domain wall are stable at zero applied field. If, however, either (2) or (3) is not satisfied, layer magnetization states containing a horizontal domain wall are not stable at zero applied field and one of the sub-layers will undergo magnetic reversal, thereby destroying the horizontal domain wall.

Using the stability criteria described above, we define category 1 magneto-optical media herein as containing no magnetic layers for which magnetic states containing horizontal domain walls are stable at zero external field and room temperature. European patent publications 304873 and 225141, which were referenced previously as examples of magnetic layers comprising two or more sub-layers, are also examples of category 1 magneto-optical media.

Category 2 magneto-optical media are defined herein as comprising a magnetic layer for which magnetic states resulting in horizontal domain walls are stable at zero external field and room temperature. Category 2 media are typically designed to employ the energy stored in a horizontal domain wall to reverse one or more sub-layers during recording or readout. U.S. patent 5,014,252 describes an example of category 2 media which utilizes the horizontal domain wall energy to reverse a sub-layer during the recording process; wherein the method and media described enable overwriting of previously recorded information without the separate erasure step required in first generation magneto-optical media. European patent 0 415 449 describes a second example of category 2 media in which the horizontal domain wall energy is employed to reverse a sub-layer during the readout process. The reversed sub-layer acts as an active mask on the media surface, thereby improving readout resolution.

In both above examples of category 2 optical recording systems, the horizontal domain wall is formed by the application of an external magnetic field. The media magnetic layer contains horizontal domain walls when the recording system is shut down or the media is removed from the apparatus. As noted previously, the energy that is stored in the horizontal domain wall is sufficient to cause magnetization reversal of one or more sub-layers under specific operating conditions and reduces the external field necessary for sub-layer reversal according to equation (1). Consequently, while the energy stored in the domain wall is necessary for some aspects of magneto-optical recording system operation, it has the undesirable effect of reducing magnetization state stability. This is particularly disadvantageous from the standpoint of written data stability under storage or archival conditions. For example, if the horizontal domain wall stores sufficient energy to switch the memory layer rapidly during the low power write process, it may also tent to destabilize written information during long term storage. The domain wall configuration in an exchange-coupled direct-overwrite media comprising two magnetic sub-layers directly after writing and prior to reset is in a substantially entirely vertical configuration. However, following exposure to a reset magnet, a horizontal domain wall configuration is induced which reduces magnetic layer magnetization state stability. Long term media stability is improved if the vertical domain wall configuration is restored prior to shutdown of the drive or removal of the media. As disclosed in this invention, it is possible to restore the stability to the media by applying a magnetic field of appropriate direction and magnitude just prior to drive shutdown or media removal. As described above, this can typically be accomplished by reducing and reversing the field used initially to form the horizontal domain wall (e.g., the reset field) using simple methods and apparatus.

In order to accurately determine means for eliminating the horizontal domain wall prior to media storage or drive shutdown it is illustrative to again review the phenomenon of magnetization state stability in exchange coupled magnetic films. Referring to Figures 4 and 5, consider a magnetic layer 18 designed for exchange-coupled direct overwrite operation comprising two sub-layers 20 and 22 which satisfies inequalities (2) and (3). Consider further that, at room temperature, the first sub-layer 20 can be switched at applied fields much smaller in magnitude than the second sub-layer 22; i.e., the first sub-layer 20 is the sub-layer designed to be switched by the application of a reset field. Figure 4 schematically illustrates a magnetization state of magnetic layer 18 corresponding to that existing in the media immediately following writing but prior to reset field exposure. Figure 5 schematically illustrates the magnetization state of magnetic layer 18 which results from exposing the magnetization state shown in figure 4 to the reset field which is applied in the B direction.

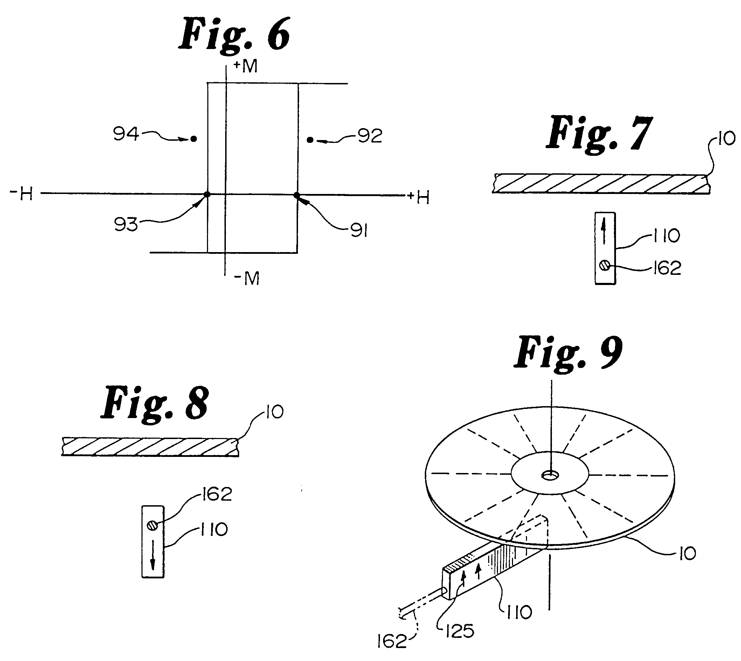

Comparison of Figures 4 and 5 reveals that application of the reset field causes sub-regions 75 of first sub-layer 20 having A-direction magnetization to reverse and assume B-direction magnetization; a substantially uniform B-direction magnetization in the first sub-layer 20 thereby results and the horizontal domain wall areas 80 are produced, as shown in figure 5. To a first approximation, the magnetic reversal behavior exhibited by sub-regions 75 of first sub-layer 20 can be described by the Kobayashi et al, formalism. Assuming that the second sub-layer 22 has uniform magnetization and does not undergo any magnetization reversal over the depicted field range, Figure 6 schematically illustrates the sub-layer 20 magnetic switching behavior according to the Kobayashi et al, formalism. The field 91 corresponds to reversal of magnetic sub-layer 20 whereupon a horizontal domain wall between magnetic sub-layers 20 and 22 forms; this field is designated as $H_{WF}$ herein. From the practical standpoint, the reset field, $H_{res}$, is typically chosen to be somewhat larger than $H_{WF}$, a value corresponding to the Figure 6 field 92 could be appropriate. The field 93 corresponds to the reversal of magnetic sub-layer 20 at which point an existing horizontal domain wall between sub-layers 20 and 22 is destroyed; this field is designated as $H_{WD}$ herein. The hysteresis loop asymmetry along the field axis results directly from equation (1). If it were possible to select a field of appropriate magnitude and sign to destroy the horizontal domain walls formed during the reset process without forming new ones, then the desired outcome is achieved. Recognition of this possibility and utilization of the loop asymmetry permits practical implementation of this invention.

If, immediately prior to shutdown of the drive or removal of the media, one could selectively reduce and reduce and reverse a reset magnet field, as illustrated in Figures 7 and 8, then it is possible to switch the first sub-layer 20 in areas where the horizontal domain wall exists; i.e. sub-regions 75 as shown in Figure 5. Referring to Figure 6, it should be possible to select a field 94 prior to shutdown of the drive (designated as $H_{SD}$ herein) such that both inequalities (4) and (5) below are satisfied,

$$H_{SD} < H_{WD} \qquad (4)$$

$$abs(H_{SD}) < H_{WF} \qquad (5)$$

where abs ($H_{SD}$) is the absolute value of $H_{SD}$. Indeed, if inequalities (4) and (5) are satisfied then the magnetization of sub-regions 75 in sub-layer 20 can be reversed without forming new horizontal wall areas in regions where no wall existed previously. Thus, the media would be in its storage state with no horizontal domain wall or the instability accompanying such a wall configuration. Moreover, for situations where the media stays in the reset field during storage, e.g. in the drive or if the magnet is incorporated as part of the media cassette, the applied field would be reduced, thus further improving stability. It is recognized that for ferromagnetic materials such as some rare earth-transition metal alloys, two spin sub-networks or sub-lattices exist (e.g. rare earth and transition metal) which are coupled antiparallel to one another; the observable external magnetization thus reflects the difference between the sub-network magnetizations. The direction of external magnetization is therefore substantially parallel to that of the dominant subnetwork magnetization. For many rare earth-transition metal alloy systems, either sub-network may dominate, depending upon alloy composition and temperature. Fore certain combinations of magnetic sub-layers, e.g. a first sub-layer with dominant transition metal sub-network magnetization, the magnetization directions and corresponding domain wall configurations would differ from those shown in Figures 4 and 5; such situations are discussed in additional detail by Kobayashi et al and in European patent application 90301894.3. Consideration of the above may change the sign of either the magnetization direction in one sub-layer or the sign of the applied fields corresponding to wall formation and destruction; however, such considerations do not impact the scope of the present invention. It should be noted that the Kobayashi et al description is a first order approximation to media behavior and does not consider a number of subtleties, such as the contribution of the vertical wall energies to switching behavior. However, for most ECDO considerations.

$$\mathrm{abs}(H_{WF}) - \mathrm{abs}(H_{WD}) \geqq 1000 \text{ Oerstads} \qquad (6)$$

It should therefore be readily possible to empirically determine an intermediate field value satisfying both inequalities (4) and (5) that produces the desired destruction of the horizontal domain wall. Recognition of this innovative solution to media instability represents a distinct pioneering development in magneto-optical media technology. However, there are a number of practical means for implementing this invention.

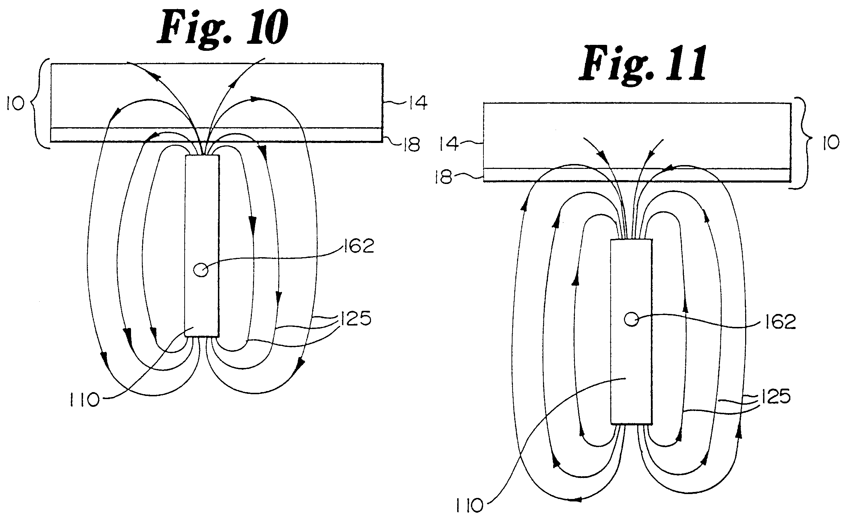

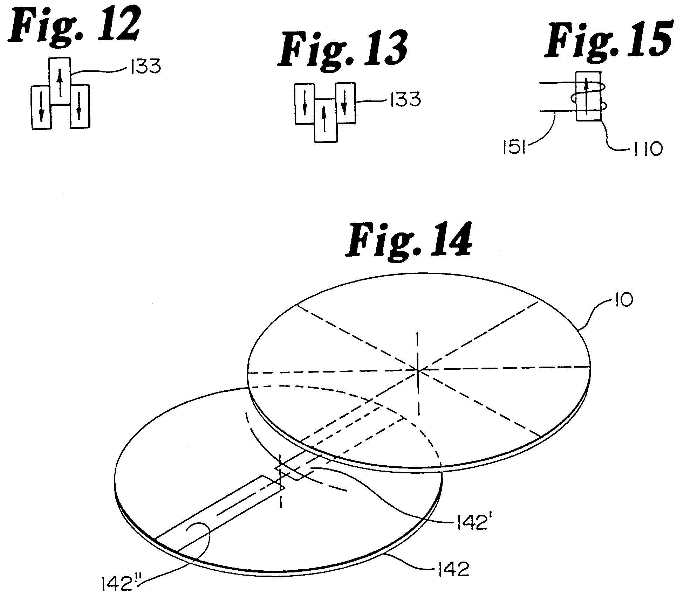

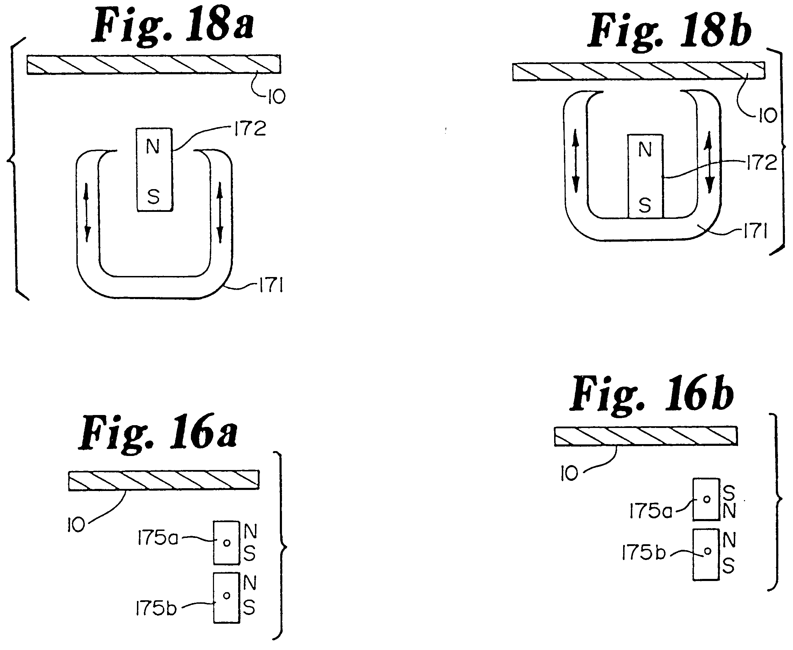

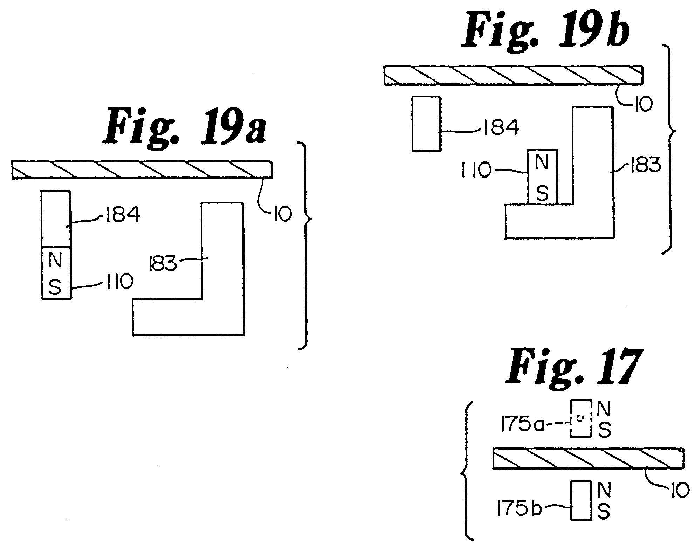

Generally, magnetization means is located proximate the exchange coupled magneto-optical media 10 for applying magnetic energy to the media prior to writing. One embodiment of magnetization means comprises a bias or reset magnet 110 which is disclosed as a rectangular magnet depicted in Figures 7, 8 and 9. The length of magnet 110 is such that it can be positioned to span the entire active area of media 10 in the radial direction. Representative magnetic flux lines 125 shown in Figures 10, 11 schematically depict the field of magnet 110 relative to media 10. Figures 10, 11 correspond to the positions of magnet 110 depicted in Figures 7, 8 respectively. Magnetic field adjustment means is required for permitting magnet 110 to selectively destroy horizontal domain walls 80. Magnetic field adjustment means may comprise a moveable magnet (Figure 7, 8 and 9), a plurality of moveable magnets 133 (Figures 12, 13), an elongated magnet, or a compositionally offset magnet 142 (Figure 14). Such a compositionally offset magnet 142 may comprise different sections 142', 142'' for creating different field fields. Power means for altering the magnetic and direction of magnetic field applied to the media may also be employed as magnetic field adjustment means - such as electrical means 151 depicted in Figure 15, or even simply an asymmetrically positioned magnet pivot member 162, as shown in Figures 7 - 11. As depicted utilizing pivot member 162, reset magnet 110 is arranges so that it can be rotated about an axis parallel to its length, but the rotation axis does not pass through the center of the rectangular cross section of magnet 110. Rotation of magnet 110 to position 180 degrees about this axis therefor both reverses the applied field and increases the magnet to media spacing, thereby reducing the field strength applied. Figures 16a and 16b depict yet another embodiment of movable magnets 175a and 175b which can be configured to apply both the reset field, Figure 16a, and the reduced, reversed field, Figure 16b, necessary to destroy the horizontal domain walls and improve media stability. Figure 17 depicts yet another example of movable magnets wherein magnets are positioned facing one another on both sides of the media. Magnetic field adjustment means may also comprise components with high magnetic permeability, commonly known as shunts or pole pieces. As further depicted schematically in Figures 18a and 18b, motion of pole piece 171 relative to magnet 172 may also be used as magnetic field adjustment means. Figures 19a and 19b illustrate yet another alternative magnetic field adjustment means employing magnet 110 and pole pieces 183 and 184.

Accordingly, magnetic field adjustment means is provided to reduce and reverse the field applied to media 10 prior to shutdown of a drive or removal of media 10 from a drive. For the sign conventions used above, the resulting field strength at shutdown, $H_{SD}$, should satisfy inequalities (4) and (5). This will result in improved stability of the media and accompanying secondary benefits.

## Claims

1. A device for improving the stability of exchange coupled magneto-optical media, comprising:
   a) magnetization means located proximate the exchange coupled magneto-optical media for applying magnetic energy to the media prior to read-write operations to form horizontal domain walls between magnetic sub-layers; and

b) magnetic field adjustment means for selectively destroying the horizontal domain walls between magnetic sub-layers in the media so that improved media stability results.

2. A device according to claim 1, wherein the magnetic field adjustment means comprises at least one movable magnet.

3. A device according to claim 2, wherein at least one movable magnet comprises an offset rotational axis suitable for asymmetric movement of the magnet relative to the media.

4. A device according to claim 1, 2 or 3, wherein the magnetic field adjustment means comprises an elongated magnet.

5. A device according to any one of claims 1 to 4, wherein the magnetic field adjustment means comprises a compositionally offset magnet.

6. A device according to any one of claims 1 to 5, wherein the magnetic field adjustment means comprises electrical means for selective application of an adjustable field to the media to diminish instability created by horizontal domain walls formed between the magnetic sub-layers in the media.

7. A device according to any one of claims 1 to 6, wherein the magnetic field adjustment means comprises power means for altering the magnitude and direction of a magnetic field applied to the media.

8. A device according to any one of claims 1 to 7, wherein the magnetic field adjustment means reduces and reverses a magnetic field applied to the media prior to shutdown of a drive utilizing the magnetic field adjustment means so that a resulting applied field is sufficient to reverse magnetization of one or more desired sub-layers in sub-regions where said sub-layers are adjacent to horizontal domain walls, thereby destroying the horizontal domain walls, but the applied field is insufficient to reverse any sub-layers which are not adjacent horizontal domain walls.

9. A device according to any one of claims 1 to 8, wherein the magnetic field adjustment means reduces and reverses the field applied to the media prior to removal of the media from a drive utilizing the magnetic field adjustment means so that the resulting applied field is sufficient to reverse one or more desired sub-layers in sub-regions where said sub-layers are adjacent to horizontal domain walls, thereby destroying the horizontal domain walls, but the applied field is insufficient to reverse any sub-layers in sub-regions which are not adjacent horizontal domain walls.

10. A device according to any one of claims 1 to 9, wherein the device is located in a drive mechanism utilizing the media.

11. A device according to any one of claims 1 to 10, wherein the device is located in a removable cartridge utilizing the media.

12. A device according to any one of claims 1 to 11 in which energy stored in the horizontal domain walls is utilized to reverse the magnetization of at least one magnetic sublayer during a write operation.

13. A device according to any one of claims 1 to 12 in which energy stored in the horizontal domain walls is utilized to reverse the magnetization of at least one magnetic sublayer during a read operation.

14. A method for improving the stability of exchange coupled magneto-optical media, comprising the steps of:
a) providing magnetization means located proximate the exchange coupled magneto-optical media for applying magnetic energy to the media; and
b) utilizing magnetic field adjustment means for reducing and reversing the magnetic energy applied to the media resulting in selective destruction of the horizontal domain wall between magnetic sub-layers in the media.

# Fig. 1

# Fig. 2

# Fig. 3

Fig. 4

Fig. 5

Fig. 6

Fig. 7

Fig. 8

Fig. 9

*Fig. 10*

*Fig. 11*

Fig. 12

Fig. 13

Fig. 15

Fig. 14

## Fig. 18a

10

172

N
S

171

## Fig. 18b

10

172

N
S

171

## Fig. 16a

10

175a — N S

175b — N S

## Fig. 16b

10

175a — S N

175b — N S

EP 0 575 738 A2

EP 0 575 738 A2

## Fig. 19a

184

N
S     110

183

10

## Fig. 19b

10

184

110    N
S

183

## Fig. 17

175a    N
S

10

175b    N
S